# EUROPÄISCHE PATENTSCHRIFT

(11) **EP 3 613 639 B1**
(45) Veröffentlichungstag und Bekanntmachung des Hinweises auf die Patenterteilung: **01.02.2023**
(21) Anmeldenummer: 18306125.8
(22) Anmeldetag: 20.08.2018
(51) Int. Cl.: H02G 3/04, B60R 16/02, H01R 13/6591, H01R 9/03

(54) **KABELBAUMELEMENT MIT ZUMINDEST BEREICHSWEISE FORMSTABILEM ELEKTRISCHEM SCHIRMELEMENT SOWIE VERFAHREN ZU DESSEN HERSTELLUNG**
HARNESS ELEMENT WITH AT LEAST PARTIALLY STABLE ELECTRIC PANEL ELEMENT AND METHOD FOR ITS PRODUCTION
ÉCHEVEAU DE CÂBLE POURVU D'ÉLÉMENT DE BLINDAGE DE FORME STABLE, AU MOINS PAR ZONES, AINSI QUE SON PROCÉDÉ DE FABRICATION

(43) Veröffentlichungstag der Anmeldung: 26.02.2020
(73) Patentinhaber: Nexans, 92400 Courbevoie (FR)
(72) Erfinder: SCHRÖER, Frank, 92637 Weiden (DE); STEINBERG, Helmut, 92721 Störnstein (DE)
(74) Vertreter: Ipsilon

(56) Entgegenhaltungen:
- EP-A1- 2 793 239
- WO-A1-2016/114184
- DE-A1-102011 082 179
- DE-A1-102015 003 061
- US-A1- 2015 170 790

## Beschreibung

### Gebiet

Die Erfindung betrifft ein Kabelbaumelement mit einem elektrischen Schirmelement sowie ein Verfahren zu dessen Herstellung.

### Hintergrund

Elektrische Leitungen, welche starke Störsignale aussenden können oder welche gegenüber Störsignalen empfindliche Signale leiten, können zur Abschirmung der ausgesendeten bzw. empfangenen Störsignale mit elektrischen Schirmen umgeben sein. Solche elektrischen Schirme können bspw. eine elektrisch leitende Umhüllung umfassen, bspw. aus einem elektrisch leitenden Geflecht oder einer elektrisch leitenden Folie, oder einer Kombination daraus. Der elektrische Schirm kann an einem oder an beiden Enden einer Leitung elektrisch an ein besonderes Potential angeschlossen sein, bspw. an ein Masse- oder Erdpotential.

Insbesondere Energieleitungen, beispielsweise von elektrischen Fahrzeugen, können starke Störsignale aussenden, wenn die von den Energieleitungen versorgten Antriebe mittels hochfrequent getakteter Steuersignale in den jeweils gewünschten Betriebspunkten angesteuert werden, so dass energiereiche Strompulse durch die Leitungen fließen. Die schnellen Schaltvorgänge in den leistungselektronischen Komponenten verursachen erhebliche Störaussendungen, so dass das Antriebsenergienetz in der Regel vollständig geschirmt ausgeführt wird. Das Antriebsenergienetz kann dabei als in Antriebsleitung und Traktionsleitung unterteilt aufgefasst werden.

Mit Antriebsleitung wird bei Elektrofahrzeugen üblicherweise die Leitung zwischen Motor und Umrichter bezeichnet, mit Traktionsleitung die Leitung zwischen Batterie und Umrichter. In der Antriebsleitung können stärkere Störsignale auftreten als in der Traktionsleitung.

Eine gängige Implementierung bei Elektrofahrzeugen ist der Aufbau eines vom Rest des Fahrzeugs isolierten Antriebsbordnetzes, bei dem nur die Gehäuse der aktiven Komponenten zum Potentialausgleich mit Erde bzw. Fahrzeugmasse verbunden sind. Zur Verringerung der Störaussendungen ist das Antriebsbordnetz vollständig geschirmt. Die Schirmung wird zum Potentialausgleich mit der Fahrzeugkarosserie verbunden. Um wirksam zu sein muss die Schirmung durchgängig sein. Das bedeutet, dass jeder Steckverbinder, jede Gehäusedurchführung sowie die Kabelschirmungen und die Komponentengehäuse für eine gute Schirmwirkung ausgelegt und, wenn möglich, schirmmäßig elektrisch miteinander verbunden werden müssen.

Die Schirmung mehrphasiger Leitungsstrecken kann durch jeweils einzeln geschirmte Leitungen erfolgen, oder durch von einem Summenschirm umgebenen Leitungsbündeln.

Einzeln geschirmte Leitungen können bei der Verlegung eine bessere Handhabung aufweisen, können dafür aber prinzipbedingt zu in jedem einzelnen Schirm fließenden hochfrequenten Schirmströmen führen, welche bei ungenügender Ankopplung der Schirme an die als Erde oder Masse dienende Karosserie eine induktive und kapazitive Kopplung der Schirme untereinander bewirkt und in andere Bereiche überkoppeln kann. Insbesondere das klassische 12V-Bordnetz in Kraftfahrzeugen kann davon betroffen sein, weil es üblicherweise die metallische Karosserie als Rückleiter nutzt.

Mehrphasige Leitungen mit einem Summenschirm weisen eine geringere Kabelkapazität auf, wodurch geringere Schirmströme auftreten und die Störabstrahlung im Vergleich zu einzeln geschirmten Leitungen kleiner ist. Außerdem kompensieren sich die Ströme der einzelnen Leiter teilweise innerhalb des Summenschirms, so dass nur der verbleibende, noch nicht kompensierte Strom auf die Schirmung koppeln kann. Die Verwendung einer Leitung mit Summenschirm hat demnach den größten Effekt auf den Schirmstrom auf der Antriebsleitung. An den anderen Stellen des Antriebsbordnetzes ist der Effekt geringer.

Eine bekannte Möglichkeit der Herstellung einer Energieleitung für ein Elektrofahrzeug umfasst das Einziehen ungeschirmter Leitungen in einen elektrisch leitenden Summenschirm, wobei die Enden des Schirms offen bleiben oder ein- bzw. beidseitig mit Steckergehäusen elektrisch kontaktiert werden bzw. auf Masse gelegt werden. Zur Isolierung wird die Anordnung mit Isolierband umwickelt oder in ein Kunststoff-Wellrohr eingezogen.

Ein auf diese Weise geschaffenes Kabelbaumelement kann je nach verbleibender Flexibilität günstige oder ungünstige Handhabungseigenschaften aufweisen. Hierbei kann insbesondere ein mit einem Summenschirm umgebenes Kabelbaumelement schwieriger zu verlegen sein als ein vergleichbares Kabelbaumelement mit einzeln geschirmten Leitungen.

Die US 2015/170790 A1 offenbart einen Kabelbaum, bei dem ein oder mehrere elektrische Leitungen mit einem Schirmgeflecht umgeben sind. Das Schirmgeflecht kann in einem oder mehreren Bereichen durch Aufbringen eines härtbaren Harzes versteift werden, wobei ein Bereich des Kabelbaums zwischen einem versteiften Bereich und einem elektrischen Anschluss nicht versteift ist und flexibel bleibt.

In einem Modul formstabil angeordnete Leitungen mit an eine Einbausituation angepasster Formgebung des Moduls können den Nachteil der schlechteren Handhabung von in einem Summenschirm angeordneten mehrphasigen Leitungen verringern.

Insbesondere in rauen Umgebungen, in denen Feuchtigkeit, Flüssigkeiten, Schmutz und/oder Festkörper an den Anschlussbereich gelangen können und dort zu Kurzschlüssen oder Signalbeeinträchtigungen führen können, ist die Abdichtung der elektrischen Leitung und auch des Anschlusses gegen diese störenden Umwelteinflüsse von großer Bedeutung. Dabei ist nach wie vor eine möglichst einfache Montage auch an schlecht zugänglichen Einbauorten wünschenswert.

### Zusammenfassung der Erfindung

Es ist wünschenswert, ein Kabelbaumelement zu erhalten, das eine verbesserte Schirmwirkung einzeln geschirmter Leitungen in einem Übergangsbereich zwischen Leitungen und einem daran angeschlossenen Anschlusselement bei zugleich günstiger Handhabung bietet. Außerdem ist es wünschenswert, ein Verfahren zur Herstellung eines solchen Kabelbaumelements zu erhalten.

Zur Lösung dieser Aufgabe schlägt die Erfindung ein Kabelbaumelement vor, welches zwei oder mehr elektrische Leiter sowie ein oder mehrere mit den Leitern verbundene Anschlusselemente aufweist. Zumindest Übergangsbereiche zwischen einem Anschlusselement und den daran angeschlossenen Leitern sind von einem schlauchringförmigen elektrischen Schirmelement umgeben, welches die Gesamtheit der mit diesem Anschlusselement verbundenen Leiter zumindest in dem Übergangsbereich umschließt. Die elektrischen Schirmelemente sind zumindest in dem Übergangsbereich mit einer härtbaren Flüssigkeit benetzt oder darin ganz oder teilweise eingebettet, so dass das elektrische Schirmelement nach dem Aushärten der härtbaren Flüssigkeit ein formstabiles Modul bildet. Das elektrische Schirmelement ist in dem Übergangsbereich zwischen dem Anschlusselement und den daran angeschlossenen elektrischen Leitungen mit elektrischen Einzelschirmen von ihm umschlossener elektrischen Leiter elektrisch verbunden.

Ein Anschlusselement kann beispielsweise einen Stecker mit einem Gehäuse und elektrischen Kontakten umfassen, mittels dessen die elektrischen Leitungen an eine Energiequelle oder einen elektrischen Verbraucher angeschlossen werden. Das Gehäuse kann aus einem elektrisch leitfähigen Material bestehen oder damit umhüllt oder ausgekleidet sein. Alternativ oder zusätzlich dazu kann das Anschlusselement einen Anschluss für einen elektrischen Schirm aufweisen.

Ein Übergangsbereich kann sich von einem leitungsseitigen Ende des Anschlusselements in Richtung der Leitungen erstrecken. Ein Übergangsbereich kann jedoch auch einen Teil des Anschlusselements einschließen. In diesem Fall wird das Anschlusselement von dem elektrischen Schirmelement zumindest teilweise eingeschlossen. Dies kann bei Anschlusselementen vorteilhaft sein, welche selbst keine Schirmwirkung bewirken, etwa bei Anschlusselementen aus nichtleitendem Material, z.B. Kunststoffen. Es kann aber auch bei elektrisch abschirmenden Anschlusselementen vorteilhaft sein, z.B. um das elektrisch abschirmende Anschlusselement flächig mit dem elektrischen Schirmelement leitend zu verbinden.

Die Benetzung der elektrischen Schirmelemente mit der härtbaren Flüssigkeit kann auf einer äußeren oder inneren Oberfläche des elektrischen Schirmelements erfolgen, aber auch beide Oberflächen umfassen.

Die Benetzung kann bspw. durch Bestreichen oder Besprühen mit der härtbaren Flüssigkeit erfolgen, aber auch durch vollständiges Eintauchen des von dem elektrischen Schirmelement umgebenen Teils des Kabelbaumelements in die härtbare Flüssigkeit.

Je nach dem Grad der Benetzung und der Struktur und der Dicke des elektrischen Schirmelements kann das elektrische Schirmelement dabei teilweise oder vollständig von der härtbaren Flüssigkeit umschlossen sein, so dass sich nach dem Aushärten eine teilweise oder vollständige Einbettung des elektrischen Schirmelements und ggf. der von ihm umschlossenen Leiter in die gehärtete härtbare Flüssigkeit ergibt.

Je nach dem Grad der Benetzung und der Struktur sowie der Dicke des elektrischen Schirmelements kann die äußere Oberfläche des elektrischen Schirmelements nach dem Aushärten der härtbaren Flüssigkeit vollständig geschlossen sein, oder Öffnungen oder Durchbrüche aufweisen. Bei letzterer Variante können sich Gewichtsvorteile und Materialeinsparungen ergeben. Gewichtsvorteile und Materialeinsparungen ergeben sich ebenfalls, wenn das Innere des elektrischen Schirmelements nach dem Aushärten der härtbaren Flüssigkeit einen formstabilen Hohlraum bildet, in dem die Leiter angeordnet und fixiert sind, z.B. wenn überschüssige härtbare Flüssigkeit aus dem Inneren des elektrischen Schirmelements vor dem Härten wieder austritt. Bei vollständigem Eintauchen in die härtbare Flüssigkeit kann ein von dem elektrischen Schirmelement umschlossener Raum, je nach der Viskosität der Flüssigkeit und der zum Aushärten benötigten Zeit, aber auch mit der härtbaren Flüssigkeit gefüllt sein, so dass sich nach dem Aushärten ein massives Bauteil ergibt, das eine besonders sichere Festlegung der Lage und Position der Leiter im Innern des elektrischen Schirmelements sicherstellt.

Bei einer Ausführungsform erstreckt sich das elektrische Schirmelement nur über den Übergangsbereich bis zu der Stelle, an dem es mit den elektrischen Einzelschirmen verbunden ist. Es ist aber auch möglich, das elektrische Schirmelement über die gesamte Länge der von ihm umschlossenen Leiter zwischen zwei Anschlusselementen anzubringen.

Die Verbindung des elektrischen Schirmelements mit den Einzelschirmen der von ihm umschlossenen Leitungen im Übergangsbereich kann die Anbindung der Schirme der Einzelleitungen an eine Fahrzeugkarosserie über das Anschlusselement vereinfachen.

Die Verbindung des elektrischen Schirmelements mit den Einzelschirmen der von ihm umschlossenen Leitungen im Übergangsbereich kann beispielsweise mittels einer Klemme oder Schelle erfolgen, die das elektrische Schirmelement und die Einzelschirme fest aneinanderdrückt, oder durch geeignete Löt- oder Schweißverbindungen. Nach dem Aushärten der härtbaren Flüssigkeit in diesem Bereich ist die elektrische Verbindung gegen ungewolltes Lösen gesichert.

Die Verbindung des elektrischen Schirmelements mit den Einzelschirmen der von ihm umschlossenen Leitungen im Übergangsbereich kann auch durch die härtbare Flüssigkeit erfolgen. In diesem Fall ist die härtbare Flüssigkeit zumindest nach dem Aushärten und zumindest in dem Verbindungsbereich elektrisch leitfähig. Elektrische Leitfähigkeit kann bspw. durch Suspension oder Einlagerung elektrisch leitfähiger Partikel in einer ausreichenden Menge in der härtbaren Flüssigkeit hergestellt werden, welche eine ausreichende Leitfähigkeit sicherstellt. Diese Partikel können beispielsweise Graphitpulver oder -körner, Metallpulver oder -späne, elektrisch leitende Kunststoffpartikel umfassen, bzw. Mischungen davon. Bei Anwendung geeigneter Verfahren bei der Herstellung des elektrischen Schirmelements können die elektrisch leitfähigen Partikel auch nur in bestimmten Bereichen zugegeben werden, welche bei Bedarf nach dem Aushärten mit isolierendem Material umhüllt werden können.

Das elektrische Schirmelement kann ein elektrisch leitendes Gewebe, Gewirke oder Geflecht umfassen, welches schlauchringförmig geschlossen und mit dem Anschlusselement und/oder Einzelschirmen der Leitungen elektrisch leitend verbunden ist. Die Leiter und/oder ein Anschlusselement können bei der Herstellung in den Schlauch eingezogen werden, bevor die härtbare Flüssigkeit aufgebracht wird oder die daraus entstehende Anordnung ganz oder bereichsweise in die härtbare Flüssigkeit eingetaucht wird. Vor dem Aushärten der härtbaren Flüssigkeit kann die Anordnung noch in eine gewünschte Form gebracht und ggf. fixiert werden, um ein an den ausgehärteten Stellen einer Kontur eines Einbauortes folgendes bzw. daran angepasstes, formstabiles Bauteil oder Modul zu erhalten.

Das elektrische Schirmelement kann leitungsseitig zumindest bereichsweise so an den Oberflächen der Leitungen anliegen, dass eine Bewegung der Leitungen be- oder verhindert ist. Diese Fixierung der Leitungen erfolgt vorzugsweise zumindest in dem Übergangsbereich zwischen Anschlusselement und den daran angeschlossenen Leitungen, so dass die Leitungen im Übergang zu dem Anschlusselement fixiert sind.

Die härtbare Flüssigkeit kann bei Verwendung elektrisch leitenden Gewebes, Gewirkes oder Geflechts selbst nichtleitend sein. Es ist aber auch denkbar, dass die härtbare Flüssigkeit zumindest nach dem Aushärten elektrisch leitfähig ist. Hierdurch kann die Schirmwirkung verbessert werden, und auch der Anschluss der Schirmung an eine Karosserie oder eine andere elektrisch leitende Struktur kann verbessert werden. Elektrische Leitfähigkeit der härtbaren Flüssigkeit kann wie weiter oben beschrieben durch Suspension elektrisch leitfähiger Partikel in ausreichender Menge in der härtbaren Flüssigkeit hergestellt werden. Die Verwendung härtbarer, elektrisch leitender Polymere ist ebenfalls denkbar.

Das Gewebe, Gewirke oder Geflecht des elektrischen Schirmelements kann bspw. ein elektrisch leitendes Metallgeflecht umfassen, etwa aus Stahl, Aluminium, Kupfer oder anderen Metallen. Es kann zur mechanischen Verstärkung faserverstärkt ausgeführt sein.

Zur Verbesserung der Schirmwirkung können die Leitungen oder das elektrische Schirmelement zusätzlich von einer elektrisch leitfähigen Folie umgeben sein, die ebenfalls mittels der härtbaren Flüssigkeit benetzt und nach deren Aushärten fixiert ist.

Alternativ oder zusätzlich zu der elektrisch leitfähigen Folie kann auch ein elektrisch leitendes Beilaufkabel innerhalb des elektrischen Schirmelements vorgesehen sein, welches an einer oder mehreren Stellen aus dem Schirm herausgeführt ist, bspw. an den Enden, und so zur elektrischen Kontaktierung des Schirms dienen kann. Das Beilaufkabel kann in den mit der härtbaren Flüssigkeit benetzten Bereichen mit dem elektrischen Schirmelement, den Leitungen und ggf. dem Anschlusselement Teil des formstabilen Moduls sein. Bei einem Ausführungsbeispiel ist das Beilaufkabel als Beilaufader ausgebildet. Die Beilaufader ist mittels einer Crimpverbindung auf einfache Weise elektrisch und mechanisch kontaktierbar.

Das elektrische Schirmelement kann ein elektrisch nichtleitendes Gewebe, Gewirke oder Geflecht umfassen, welches schlauchringförmig geschlossen ist. In diesem Fall ist die Verwendung einer zumindest nach dem Aushärten elektrisch hinreichend leitfähigen härtbaren Flüssigkeit notwendig.

In den mit der härtbaren Flüssigkeit benetzten Bereichen können ein oder mehrere Befestigungselemente vorgesehen sein, welche nach dem Aushärten integraler Teil der jeweiligen formstabilen Module sind und zur Befestigung des Kabelbaumelements an einem Einbauort dienen. Hierzu können die Befestigungselemente teilweise frei liegen. Diese Befestigungselemente können aus einem leitfähigen Material bestehen und gleichzeitig zur Montage und zur elektrischen Verbindung des elektrischen Schirmelements mit Erde oder Masse am Montageort dienen. Bei Verlegung solcher Kabelbaumelemente an einer metallischen Karosserie oder einem metallischen Gehäuse ist das elektrische Schirmelement so auf einfache Weise an einer oder mehreren Stellen elektrisch anschließbar.

Die härtbare Flüssigkeit kann eine geeignete Kombination von flüssigem Binder und flüssigem Härter umfassen, welche an der Atmosphäre oder unter besonderen atmosphärischen Bedingungen aushärtet. Besondere atmosphärische Bedingungen können bestimmte Druck-, Feuchtigkeits- und Temperaturverhältnisse umfassen, aber auch bestimmte Gase, die in der normalen Umgebungsluft nicht oder nicht in ausreichender Konzentration enthalten sind.

Binder und Härter können vor der Benetzung des Gewebes, Gewirkes oder Geflechts miteinander vermischt oder nacheinander aufgetragen bzw. zugegeben werden.

Zur Beschleunigung des Aushärtevorgangs kann das Bauteil erwärmt werden, bspw. mittels Infrarotstrahlung, oder mit UV-Licht bestrahlt werden. Die Leiter, deren Isolierung und ggf. Schirm, sowie das Gewebe, Geflecht oder Gewirke des elektrischen Schirmelements müssen so beschaffen sein, dass sie der Erhitzung oder Bestrahlung widerstehen.

Die härtbare Flüssigkeit kann auch eine einzige Komponente enthalten, die mittels einer der vorstehend beschriebenen Maßnahmen aushärtbar ist.

Je nach Anforderung oder Anwendung kann das erfindungsgemäße Kabelbaumelement nur im Übergangsbereich zwischen einzeln geschirmten Leitungen und damit verbundenen Anschlusselementen einen Summenschirm aufweisen, oder über die gesamte Länge der Leitungen zwischen damit verbundenen Anschlusselementen einen Summenschirm aufweisen. Die Benetzung des elektrischen Schirmelements mit härtbarer Flüssigkeit kann je nach Anforderung oder Anwendung über die gesamte Länge des Kabelbaumelements erfolgen, so dass ein insgesamt formstabiles Modul gebildet wird, oder nur abschnittsweise, wodurch eine gewisse Flexibilität des Kabelbaums erhalten bleibt. Dabei kann, wiederum je nach Anforderung oder Anwendung, das Anschlusselement formstabil mit den Leitungen verbunden sein, oder es sind nur die Leitungen formstabil fixiert und das oder die Anschlusselemente bleiben über die damit verbundenen Leitungen mehr oder weniger beweglich.

Die Anschlusselemente des erfindungsgemäßen Kabelbaumelements können anschlussseitig abnehmbare Kappen aufweisen, welche ein Eindringen der härtbaren Flüssigkeit in das Anschlusselement verhindern. Diese Kappen können während der Herstellung, aber auch während des Transports und bis unmittelbar vor dem Einbau des Kabelbaumelements an den Anschlusselementen verbleiben und so vor dem Eindringen von Schmutz oder Feuchtigkeit schützen.

Bei einem Verfahren zur Herstellung des erfindungsgemäßen Kabelbaumelements werden zumindest längenmäßig vorkonfektionierte Leitungen eines Kabelbaumsegments in schlauchringförmiges elektrisches Schirmelement, also einen Summenschirm, eingezogen. Der Summenschirm kann dabei über die gesamte Länge der Leitungen gehen, oder nur einen Übergangsbereich zwischen einem Anschlusselement und den Leitungen umhüllen. Der Bereich, in dem ein formstabiles Modul erhalten werden soll, wird mit einer härtbaren Flüssigkeit benetzt, bspw. bestrichen, besprüht oder darin eingetaucht. Danach wird der mit der härtbaren Flüssigkeit benetzte Bereich in eine gewünschte Form gebracht und ausgehärtet. Wenn vor dem Einziehen in den Summenschirm noch keine Anschlusselemente mit den Leitungen verbunden sind, können diese vor dem Benetzen mit der härtbaren Flüssigkeit noch verbunden werden. Dies ist insbesondere dann sinnvoll, wenn der Summenschirm mit einem Anschlusselement zusammen ein formstabiles Modul bilden soll. Außerdem werden elektrische Einzelschirme von Leitungen im Übergangsbereich mit dem elektrischen Schirmelement verbunden. Die elektrische Verbindung kann vor oder nach dem Benetzen mit der härtbaren Flüssigkeit hergestellt werden.

Die mit der härtbaren Flüssigkeit benetzten Segmente oder Teile des Kabelbaumelements, also Leitungen und/oder Anschlusselemente, weisen bekanntermaßen gegenüber nicht vollständig oder teilweise als formstabile Module ausgeführten Kabelbäumen eine erhöhte Widerstandsfähigkeit gegenüber mechanischen Beanspruchungen wie bspw. Vibration, Zugbelastung, und dergleichen auf. Daraus kann eine längere Nutzungsdauer und eine bessere Wiederverwendbarkeit nach einer Demontage resultieren. Die elektrische Verbindung der Einzelschirme mit dem elektrischen Schirmelement im Übergangsbereich vereinfacht die elektrische Verbindung der Schirme mit der Fahrzeugkarosserie.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: a) - e) schematische Darstellungen von Komponenten eines erfindungsgemäßen Kabelbaumelements mit unterschiedlichen Ausführungen elektrischer Schirmelemente,
- Fig. 2: eine erste schematische Darstellung eines Kabelbaums mit einem elektrischen Schirmelement,
- Fig. 3: eine zweite schematische Darstellung eines Kabelbaums mit einem elektrischen Schirmelement,
- Fig. 4: eine erste Detailabbildung eines elektrischen Schirmelements an einem Anschlusselement,
- Fig. 5: eine zweite Detailabbildung eines elektrischen Schirmelements an einem Anschlusselement, und
- Fig. 6: ein exemplarisches Flussdiagramm eines Verfahrens zur Herstellung eines erfindungsgemäßen Kabelbaumelements.

Gleiche oder ähnliche Elemente sind in den Figuren mit gleichen oder ähnlichen Bezugszeichen versehen.

### Ausführungsbeispiele

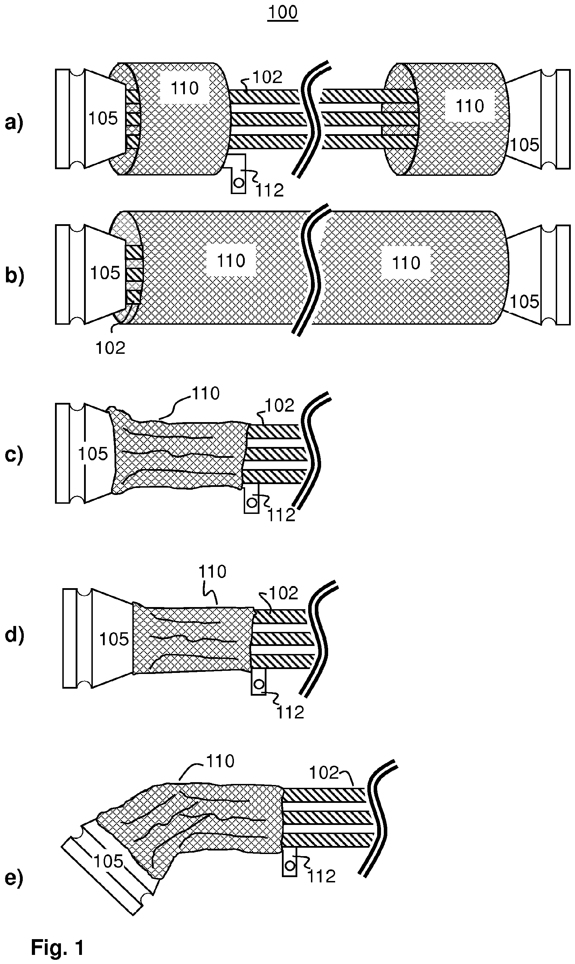

Figuren 1 a) bis e) zeigen beispielhafte schematische Darstellungen von Komponenten eines erfindungsgemäßen Kabelbaumelements 100 mit unterschiedlichen Ausführungen elektrischer Schirmelemente 110.

In Figur 1 a) ist ein erstes Ausführungsbeispiel eines Kabelbaumelements 100 mit drei elektrischen Leitern 102 gezeigt, welche an Anschlusselementen 105 und 106 angeschlossen sind. Elektrische Schirmelemente 110 und 111 sind in Übergangsbereichen zwischen den Anschlusselementen 105 und 106 und den elektrischen Leitungen 102 über die elektrischen Leitungen 102 gezogen, aber noch nicht in Form gebracht oder fixiert. Ein Befestigungselement 112 ist so zu dem Schirmelement positioniert, dass es nach dem in Form bringen des mit der härtbaren Flüssigkeit benetzten Schirmelements und nach dem Aushärten fest mit dem so entstandenen formstabilen Modul verbunden ist. Das Befestigungselement 112 kann aus einem leitfähigen Material bestehen und zugleich der elektrischen Verbindung des Schirmelements 110 mit einer Karosserie oder einer Erd- bzw. Masseleitung dienen. Bei diesem Ausführungsbeispiel sind die elektrischen Leitungen 102 jeweils einzeln geschirmt.

In Figur 1 b) ist ein zweites Ausführungsbeispiel eines Kabelbaumelements 100 mit drei elektrischen Leitern 102 gezeigt, welche an Anschlusselementen 105 und 106 angeschlossen sind. Das Kabelbaumelement ist in ein elektrisches Schirmelement 110 eingezogen, welches sich über die gesamte Länge zwischen den Anschlusselementen 105 und 106 erstreckt, und die Anschlusselemente 105 und 106 teilweise oder ganz einschließen kann. Auch bei diesem Ausführungsbeispiel ist das elektrische Schirmelement noch nicht in Form gebracht oder fixiert.

In Figur 1 c) ist ein Detail des Ausführungsbeispiels aus Figur 1 a) gezeigt. In dieser Detaildarstellung ist das elektrische Schirmelement 110 an das Anschlusselement 105 und die elektrischen Leitungen 102 angelegt und berührt diese zumindest an einigen Punkten. In der Figur ist das als Maschennetz dargestellte elektrische Schirmelement 110 zusammengedrückt worden, bis es an dem Anschlusselement 105 und an den elektrischen Leitungen 102 anliegt. In dieser Form kann das elektrische Schirmelement 110 nun fixiert werden, oder es kann zunächst in eine gewünschte Form gebracht werden, z.B. wie in Figur 1 e) gezeigt. In Figuren 1 c) und 1 e) umschließt das elektrische Schirmelement 110 das Anschlusselement 105 teilweise, z.B. um dadurch einen elektrischen Kontakt zu dem leitfähigen Gehäuse des Anschlusselements 105 herzustellen und das Gehäuse mit dem elektrischen Schirmelement zu einem formstabilen Modul zu verbinden, nachdem das elektrische Schirmelement mit der härtbaren Flüssigkeit benetzt und ausgehärtet wurde. Befestigungselement 112 ist, wie mit Bezug auf Figur 1 a beschrieben, mit dem Schirmelement 110 verbunden.

In Figur 1 d) ist ein Detail einer Variante des ersten Ausführungsbeispiels aus Figur 1 a) gezeigt. Bei dieser Variante stößt das elektrische Schirmelement 110 an das Anschlusselement 105 an, umschließt es aber nicht. Hierdurch kann eine gewisse Restflexibilität der Anordnung erhalten bleiben, die zur Montage erforderlich sein kann. Der elektrische Anschluss des elektrischen Schirmelements an das Anschlusselement bzw. an Erde oder Masse kann bspw. mittels einer kurzen Leitung oder Lasche erfolgen. Alternativ oder zusätzlich kann Befestigungselement 112 zum Anschluss des elektrischen Schirmelements 110 an das Anschlusselement an Erde oder Masse genutzt werden.

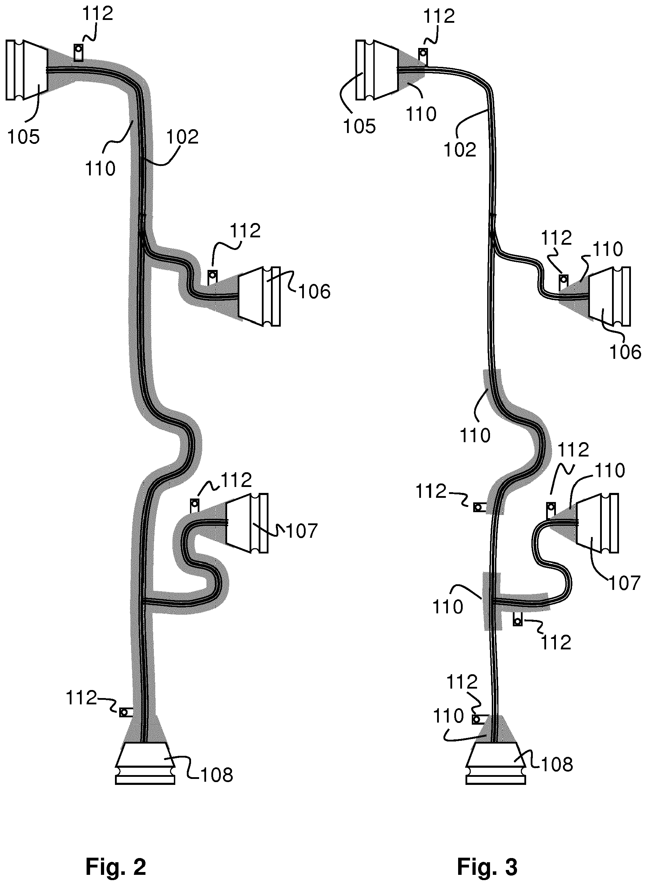

Figur 2 zeigt eine erste schematische Darstellung eines beispielhaften Kabelbaumelements 100 mit einem elektrischen Schirmelement 110, welches sich z.B. als Summenschirm über die gesamte Länge des Kabelbaumelements 100 erstreckt. Das elektrische Schirmelement 110 ist durch die graue Fläche angedeutet und erstreckt sich teilweise über die Anschlusselemente 105, 106, 107 und 108. Die elektrischen Leitungen 102 sind durch die in schwarzer Farbe ausgeführten parallelen Striche angedeutet. Die Anordnung kann stellenweise oder insgesamt mit der härtbaren Flüssigkeit benetzt sein, so dass sich entweder stellenweise formstabile Module ausbilden oder das gesamte Kabelbaumelement ein insgesamt formstabiles Modul bildet. An mehreren Stellen sind Befestigungselemente 112 angeordnet, mittels derer eine mechanische Befestigung des Kabelbaumelements 100 an einem Einbauort erfolgen kann. Optional kann über eines oder mehrere der Befestigungselemente 112 eine elektrische Verbindung des Schirmelements 110 mit einer Karosserie oder einer Erd- bzw. Masseleitung erfolgen.

Figur 3 zeigt eine zweite schematische Darstellung eines beispielhaften Kabelbaumelements 100 mit einem elektrischen Schirmelement 110. Bei dieser Ausführung sind elektrische Schirmelemente 110 nur an einigen Stellen vorgesehen, bspw. an Übergängen zu Anschlusselementen oder an Kabelabzweigungen. Die Leitungen an den übrigen Stellen sind mit einzelnen Schirmen ausgeführt. Wie in der zuvor beschriebenen Ausführung kann die Anordnung stellenweise mit der härtbaren Flüssigkeit benetzt sein, vorzugsweise dort, wo elektrische Schirmelemente 110 angeordnet sind, so dass sich dort stellenweise formstabile Module ausbilden. Die nicht formstabilen Teile des Kabelbaumelements 100 können gebündelt geführt sein, bspw. mittels Kabelbindern, und so an einem Einbauort eingebaut und befestigt werden Transport und Handhabung können dadurch vereinfacht sein. Eine Befestigung des Kabelbaumelements 100 am Einbauort und optional eine elektrische Verbindung der Schirmelemente mit Erde oder Masse kann mittels der an unterschiedlichen Stellen vorgesehenen Befestigungselemente 112 erfolgen.

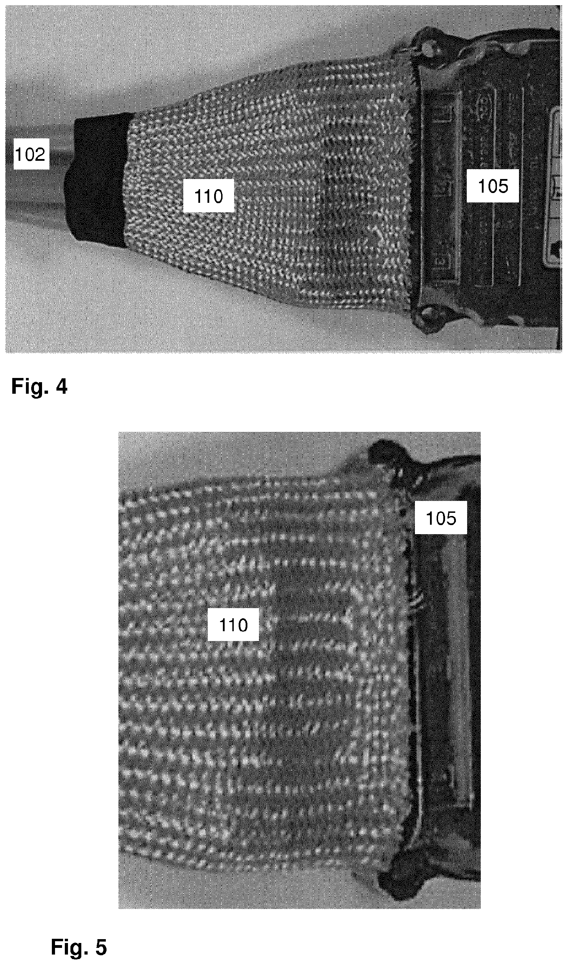

Figur 4 zeigt eine erste Detailabbildung eines elektrischen Schirmelements 110 an einem Anschlusselement 105. Das Schirmelement 110 umfasst ein metallisches Geflecht, welches die Leiter 102 schlauchringförmig umschließt. Das Schirmelement 110 erstreckt sich dabei von einem leiterseitigen Ende des Anschlusselements 105, wo es stumpf anliegt, bis über die Leiter 102. Das leiterseitige Ende des Schirmelements 110 ist eng mit einem Band umwickelt, welches das Schirmelement 110 eng an die Leiter andrückt. Ein elektrischer Kontakt zwischen Anschlusselement 105 und Schirmelement 110 kann auf der Innenseite durch einen entsprechenden Anschluss hergestellt sein, oder durch eine elektrisch leitfähige härtbare Flüssigkeit, mit der das Schirmelement 110 bestrichen wird. Das Gehäuse des Anschlusselements 105 kann dabei selbst elektrisch leitfähig sein, oder auf seiner Innen- und/oder Außenseite mit einem elektrisch leitfähigen Material verkleidet sein, welches in elektrischem Kontakt mit dem Schirmelement steht. Die in der Figur abgebildeten elektrischen Leitungen sind mit einzelnen Schirmen versehen, welche innerhalb des Schirmelements 110 mit diesem elektrisch verbunden sind.

Figur 5 zeigt eine zweite Detailabbildung eines elektrischen Schirmelements an einem Anschlusselement 105. In Figur 5 ist ein vergrößerter Ausschnitt der Anordnung aus Figur 4 gezeigt, der den stumpfen Anschluss des Schirmelements 110 an das Anschlusselement 105 zeigt. Nach dem benetzen des Schirmelements 110 mit einer härtbaren Flüssigkeit und dem Aushärten bilden Schirmelement 110 und Anschlusselement 105 ein formstabiles Modul.

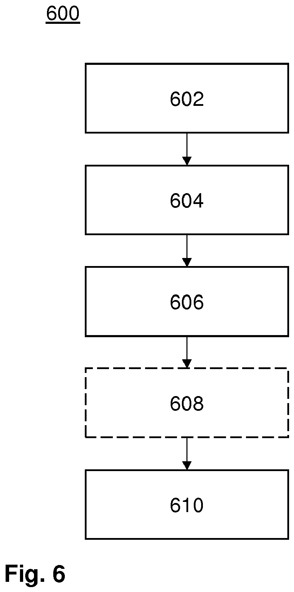

Figur 6 zeigt ein exemplarisches Flussdiagramm eines Verfahrens 600 zur Herstellung eines erfindungsgemäßen Kabelbaumelements. In Schritt 602 werden längenmäßig vorkonfektionierte elektrische Leiter gebündelt und in Schritt 604 in ein elektrisches Schirmelement eingezogen bzw. mit diesem ummantelt. In Schritt 606 werden die Schirmelemente zumindest teilweise mit einer härtbaren Flüssigkeit benetzt, welche in Schritt 610 ausgehärtet wird. Zuvor können die Schirmelemente vor dem Härten optional in eine gewünschte Form gebracht werden, Schritt 608. Je nach Bedarf können Schritte 606 und 608 auch vertauscht sein.

### Bezugszeichenliste

- 100: Kabelbaumelement
- 102: elektrischer Leiter
- 105: Anschlusselement
- 106: Anschlusselement
- 107: Anschlusselement
- 108: Anschlusselement
- 110: Schirmelement
- 111: Schirmelement
- 112: Befestigungselement
- 600: Verfahren
- 602: Bündeln
- 604: Einziehen
- 606: Benetzen
- 608: in Form bringen
- 610: Härten

## Patentansprüche

1. Kabelbaumelement (100) mit zwei oder mehr elektrischen Leitern (102) und einem oder mehreren mit den Leitern (102) verbundenen Anschlusselementen (105-108), wobei zumindest ein Übergangsbereich zwischen einem Anschlusselement (105-108) und daran angeschlossenen elektrischen Leitern (102) von einem schlauchringförmigen elektrischen Schirmelement (110, 111) umgeben ist, welches die Gesamtheit der elektrischen Leiter (102) und das Anschlusselement (105-108) zumindest in dem Übergangsbereich umschließt, wobei das elektrische Schirmelement (110, 111) zumindest in dem Übergangsbereich mit einer härtbaren Flüssigkeit benetzt oder darin zumindest teilweise eingebettet ist, so dass das elektrische Schirmelement (110, 111) und das Anschlusselement nach dem Aushärten der härtbaren Flüssigkeit ein formstabiles Modul bilden, **dadurch gekennzeichnet, dass** das elektrische Schirmelement (110, 111) in dem Übergangsbereich mit elektrischen Einzelschirmen der von ihm umschlossenen elektrischen Leiter (102) elektrisch verbunden ist.

2. Kabelbaumelement (100) nach Anspruch 1, wobei das elektrische Schirmelement (110, 111) sich über die gesamte Länge der von ihm umschlossenen Leiter (102) zwischen zwei Anschlusselementen (105-108) erstreckt.

3. Kabelbaumelement (100) nach einem der vorhergehenden Ansprüche, wobei das elektrische Schirmelement (110, 111) ein elektrisch leitendes Gewebe Gewirke oder Geflecht umfasst, welches schlauchringförmig geschlossen ist.

4. Kabelbaumelement (100) nach einem der vorhergehenden Ansprüche, wobei die härtbare Flüssigkeit zumindest nach dem Aushärten elektrisch leitfähig ist.

5. Kabelbaumelement (100) nach einem der Ansprüche 1 oder 2, wobei das elektrische
Schirmelement (110, 111) ein elektrisch nichtleitendes Gewebe, Gewirke oder Geflecht umfasst, welches schlauchringförmig geschlossen ist, und wobei die härtbare Flüssigkeit zumindest nach dem Aushärten elektrisch leitfähig ist.

6. Kabelbaumelement (100) nach Anspruch 4 oder 5, wobei in der härtbaren Flüssigkeit elektrisch leitfähige Partikel eingelagert sind.

7. Kabelbaumelement (100) nach einem der vorhergehenden Ansprüche, wobei das Innere des elektrischen Schirmelements (110, 111) nach dem Aushärten der härtbaren Flüssigkeit einen Hohlraum bildet, in dem die Leiter (102) angeordnet und fixiert sind.

8. Kabelbaumelement (100) nach einem der Ansprüche 3 oder 5, wobei ein von dem Gewebe, Gewirke oder Geflecht des elektrischen Schirmelements (110, 111) umschlossener Raum von den Leitern (102) und der härtbaren Flüssigkeit vollständig ausgefüllt ist.

9. Kabelbaumelement (100) nach einem der vorhergehenden Ansprüche, wobei das elektrische Schirmelement (110, 111) vor dem Aushärten der härtbaren Flüssigkeit in eine Form gebracht ist, welche einem Einbauort des Anschlusselements (105-108) entspricht.

10. Kabelbaumelement (100) nach einem der vorhergehenden Ansprüche, wobei das elektrische
Schirmelement (110, 111) im Übergangsbereich zu dem Anschlusselement (105-108) zumindest bereichsweise an den Oberflächen der Leitungen (102) so anliegt, dass eine Bewegung der Leitungen (102) am leitungsseitigen Ende des elektrischen
Schirmelements (110, 111) be- oder verhindert ist.

11. Kabelbaumelement (100) nach einem der vorhergehenden Ansprüche, wobei in von mit der härtbaren Flüssigkeit benetzten Bereichen ein oder mehrere Befestigungselemente vorgesehen sind, welche nach dem Aushärten Teil der jeweiligen formstabilen Module sind.

12. Kabelbaumelement (100) nach Anspruch 11, wobei die Befestigungselemente elektrisch leitfähig und mit dem elektrischen Schirmelement (110, 111) elektrisch verbunden sind, so dass ein elektrischer Kontakt mit dem Schirmelement (110, 111) am Befestigungsort herstellbar ist.

13. Kabelbaumelement (100) nach einem der vorhergehenden Ansprüche, wobei das Anschlusselement (105-108) eine abnehmbare Kappe aufweist, die zumindest während der Herstellung des Kabelbaumelements (100) das Anschlusselement (105-108) vor dem Eindringen der härtbaren Flüssigkeit schützt.

14. Kabelbaumelement (100) nach einem der vorhergehenden Ansprüche, wobei die härtbare Flüssigkeit durch Zugabe eines Härters, Bestrahlung mit Licht einer bestimmten Wellenlänge oder eines bestimmten Wellenlängenbereichs, Aussetzen einer besonderen atmosphärischen Umgebung und/oder Erhitzung aushärtbar ist oder die Aushärtung hierdurch beschleunigt wird.

15. Verfahren (600) zur Herstellung eines Kabelbaumelements (100) nach einem der vorhergehenden Ansprüche, umfassend:
- Bündeln (602) von längenmäßig vorkonfektionierten elektrischen Leitern (102) des Kabelbaumelements (100) ,
- Einziehen (604) des Leitungsbündels in ein schlauchringförmiges elektrisches Schirmelement (110, 111), welches ein Anschlusselement (105-108) und daran angeschlossene elektrische Leiter (102) zumindest in einem Übergangsbereich zwischen dem Anschlusselement (105-108) und den daran angeschlossenen elektrischen Leitern (102) umschließt,
- zumindest teilweises Benetzen (606) des elektrischen Schirmelements (110, 111) in dem Übergangsbereich mit einer härtbaren Flüssigkeit, und
- Härten (610) der härtbaren Flüssigkeit, so dass das elektrische Schirmelement (110, 111) und das Anschlusselement ein formstabiles Modul bilden, **dadurch gekennzeichnet, dass** das Verfahren außerdem das elektrische Verbinden elektrischer Einzelschirme der von dem elektrischen Schirmelement (110, 111) umschlossenen Leiter (102) mit dem elektrischen Schirmelement (110, 111) in dem Übergangsbereich umfasst.

16. Verfahren nach Anspruch 15, vor dem Härten außerdem umfassend:
- in Form bringen (608) des mit der härtbaren Flüssigkeit benetzten elektrischen Schirmelements (110, 111), wobei die Form des ausgehärteten elektrischen Schirmelements (110, 111) und der davon umschlossenen elektrischen Leiter (102) der Form eines Einbauorts des Kabelbaumelements (100) entspricht oder an diese angepasst ist.

## Claims

1. A harness element (100) having two or more electrical conductors (102) and one or more connecting elements (105-108) connected to the conductors (102), wherein at least one transition region between a connecting element (105-108) and electrical conductors (102) connected thereto is surrounded by a hose-ring-shaped electrical shield element (110, 111), which at least in the transition region encloses the entirety of the electrical conductors (102) and the connecting element (105-108), wherein the electrical shield element (110, 111) is wetted at least in the transition region with a curable liquid or is at least partially embedded therein, so that the electrical shield element (110, 111) and the connecting element form a form-stable module after the curing of the curable liquid, **characterized in that** the electrical shield element (110, 111) is electrically connected to individual electrical shields of the electrical conductors (102) enclosed by it.

2. The harness element (100) according to claim 1, wherein the electrical shield element (110, 111) extends between two connecting elements (105-108) over the entire length of the conductors (102) enclosed by it.

3. The harness element (100) according to any one of the preceding claims, wherein the electrical shield element (110, 111) comprises an electrically conductive fabric, knitted fabric or braid, which is closed in a hose-ring-shaped manner.

4. The harness element (100) according to any one of the preceding claims, wherein the curable liquid is electrically conductive at least after the curing.

5. The harness element (100) according to any one of claims 1 or 2, wherein the electrical shield element (110-111) comprises an electrically non-conductive fabric, knitted fabric or braid, which is closed in a hose-ring-shaped manner, and wherein the curable liquid is electrically conductive at least after the curing.

6. The harness element (100) according to claim 4 or 5, wherein electrically conductive particles are embedded in the curable liquid.

7. The harness element (100) according to any one of the preceding claims, wherein the interior of the electrical shield element (110, 111) forms a hollow space after the curing of the curable liquid, in which hollow space the conductors (102) are arranged and fixed.

8. The harness element (100) according to any one of claims 3 or 5, wherein a space enclosed by the fabric, knitted fabric or braid of the electric shield element (110, 111) is completely filled by the conductors (102) and the curable liquid.

9. The harness element (100) according to any one of the preceding claims, wherein before the curing of the curable liquid the electrical shield element (110, 111) is brought into a form, which corresponds to an installation location of the connecting element (105-108).

10. The harness element (100) according to any one of the preceding claims, wherein in the transition region to the connecting element (105-108) the electrical shield element (110, 111) abuts against the surfaces of the lines (102) at least in certain areas such that a movement of the lines is impeded or prevented on the line side end of the electrical shield element (110, 111).

11. The harness element (100) according to any one of the preceding claims, wherein in the regions wetted by the curable liquid one or more fastening elements are provided, which after the curing are part of the respective form-stable modules.

12. The harness element (100) according to claim 11, wherein the fastening elements are electrically conductive and are electrically connected to the electrical shield element (110, 111) so that an electrical contact can be established with the shield element (110, 111) at the fastening site.

13. The harness element (100) according to any one of the preceding claims, wherein the connecting element (105-108) has a removable cap, which at least during the production of the harness element (100) protects the connecting element (105-108) against penetration of the curable liquid.

14. The harness element (100) according to any one of the preceding claims, wherein the curable liquid can be cured by the addition of a curing agent, irradiation with light of a specific wavelength or a specific wavelength range, exposure to a special atmospheric environment and/or heating or the curing is accelerated thereby.

15. A method (600) for producing a harness element (100) according to any one of the preceding claims, comprising:
- Bundling (602) lengthwise prefabricated electrical conductors (102) of the harness element (100),
- inserting (604) the line bundle into a hose-ring-shaped electrical shield element (110, 111), which encloses a connecting element (105-108) and electrical conductors (102) connected thereto at least in a transition region between the connecting element (105-108) and the electrical conductors (102) connected thereto,
- at least partial wetting (606) of the electrical shield element (110, 111) in the transition region with the curable liquid, and
- curing the curable liquid, so that the electrical shield element (110, 111) and the connecting element form a form-stable module, **characterized in that** the method also comprises the electrical connection of individual electrical shields of the conductors (102) enclosed by the electrical shield element (110, 111) to the electrical shield element (110, 111) in the transition region.

16. The method according to claim 15, also comprising before the curing:
- bringing (608) into the form of the electrical shield element (110, 111) wetted with the curable liquid, wherein the form of the cured electrical shield element (110, 111) and the electrical conductor (102) enclosed by it correspond to the form of the installation location of the harness element (100) or is adapted to it.

## Revendications

1. Écheveau de câbles (100) avec deux conducteurs électriques (102) ou plus et un ou plusieurs éléments de raccordement (105 - 108) reliés avec les conducteurs (102), dans lequel au moins une zone de transition entre un élément de raccordement (105 - 108) et les conducteurs électriques (102) qui y sont raccordés est entourée d'un élément de blindage électrique (110, 111) en forme d'anneau tubulaire, qui entoure l'ensemble des conducteurs électriques (102) et l'élément de raccordement (105 - 108) au moins dans la zone de transition, dans lequel l'élément de blindage électrique (110, 111) est mouillé, au moins dans la zone de transition, avec un liquide durcissable ou y est incorporé au moins partiellement, de façon à ce que l'élément de blindage électrique (110, 111) et l'élément de raccordement forment, après le durcissement du liquide durcissable, un module de forme stable, **caractérisé en ce que** l'élément de blindage électrique (110, 111) est relié électriquement, dans la zone de transition, avec des blindages électriques individuels des conducteurs électriques (102) entourés par celui-ci.

2. Écheveau de câbles (100) selon la revendication 1, dans lequel l'élément de blindage électrique (110, 111) s'étend sur toute la longueur des conducteurs (102) entourés par celui-ci entre deux éléments de raccordement (105 - 108).

3. Écheveau de câbles (100) selon l'une des revendications précédentes, dans lequel l'élément de blindage électrique (110, 111) comprend un tissu, un tricot ou un treillis électroconducteur qui est fermé sous la forme d'un anneau tubulaire.

4. Écheveau de câbles (100) selon l'une des revendications précédentes, dans lequel le liquide durcissable est électroconducteur au moins après le durcissement.

5. Écheveau de câbles (100) selon l'une des revendications 1 ou 2, dans lequel l'élément de blindage électrique (110, 111) comprend un tissu, un tricot ou un treillis non électroconducteur qui est fermé sous la forme d'un anneau tubulaire et dans lequel le liquide durcissable est électroconducteur au moins après le durcissement.

6. Écheveau de câbles (100) selon la revendication 4 ou 5, dans lequel, dans le liquide durcissable, sont intégrées des particules électroconductrices.

7. Écheveau de câbles (100) selon l'une des revendications précédentes, dans lequel l'intérieur de l'élément de blindage électrique (110, 111) forme, après le durcissement du liquide durcissable, une cavité dans laquelle les conducteurs (102) sont disposés et fixés.

8. Écheveau de câbles (100) selon l'une des revendications 3 ou 5, dans lequel un espace entouré par le tissu, tricot ou treillis de l'élément de blindage électrique (110, 111) est entièrement rempli par les conducteurs (102) et le liquide durcissable.

9. Écheveau de câbles (100) selon l'une des revendications précédentes, dans lequel l'élément de blindage électrique (110, 111) est façonné, avant le durcissement du liquide durcissable, avec une forme qui correspond à un site d'installation de l'élément de raccordement (105 - 108).

10. Écheveau de câbles (100) selon l'une des revendications précédentes, dans lequel l'élément de blindage électrique (110, 111) s'appuie, dans la zone de transition vers l'élément de raccordement (105 - 108), au moins à certains endroits, contre les surfaces des conducteurs (102) de façon à empêcher un déplacement des conducteurs (102) à l'extrémité côté conducteurs de l'élément de blindage électrique (110, 111).

11. Écheveau de câbles (100) selon l'une des revendications précédentes, dans lequel, dans les zones mouillées par le liquide durcissable, un ou plusieurs éléments de fixation sont prévus, qui, après le durcissement, font partie des modules de forme stable.

12. Écheveau de câbles (100) selon la revendication 11, dans lequel les éléments de fixation sont électroconducteurs et sont reliés électriquement avec l'élément de blindage électrique (110, 111) de façon à ce qu'un contact électrique puisse être établi avec l'élément de blindage électrique (110, 111) à l'endroit de la fixation.

13. Écheveau de câbles (100) selon l'une des revendications précédentes, dans lequel l'élément de raccordement (105 - 108) comprend un capuchon amovible qui protège l'élément de raccordement (105 - 108) contre la pénétration du liquide durcissable au moins pendant la fabrication de l'écheveau de câbles (100).

14. Écheveau de câbles (100) selon l'une des revendications précédentes, dans lequel le liquide durcissable peut être durci par l'ajout d'un durcisseur, par irradiation avec une lumière d'une longueur d'onde déterminée ou d'un domaine de longueurs d'ondes déterminé, par exposition à un environnement atmosphérique particulier et/ou par chauffage ou le durcissement est accéléré par un de ces procédés.

15. Procédé (600) pour la fabrication d'un écheveau de câbles (100) selon l'une des revendications précédentes, comprenant :
- le regroupement (602) de conducteurs électriques (102) pré-confectionnés à la longueur souhaitée de l'écheveau de câbles (100),
- la rétraction (604) du faisceau de câbles dans un élément de blindage électrique (110, 111) en forme d'anneau tubulaire, qui entoure un élément de raccordement (105 - 108) et des conducteurs électriques (102) qui y sont raccordés au moins dans une zone de transition entre l'élément de raccordement (105 - 108) et les conducteurs électriques (102) qui y sont raccordés,
- mouillage (606) au moins partiel de l'élément de blindage électrique (110, 111) dans la zone de transition avec un liquide durcissable et
- durcissement (610) du liquide durcissable de façon à ce que l'élément de blindage électrique (110, 111) et l'élément de raccordement constituent un module à forme stable, **caractérisé en ce que** le procédé comprend en outre le raccordement électrique de blindages électriques individuels des conducteurs (102) entourés par l'élément de blindage électrique (110, 111) avec l'élément de blindage électrique (110, 111) dans la zone de transition.

16. Procédé selon la revendication 15, comprenant en outre, avant le durcissement :
- mise en forme (608) de l'élément de blindage électrique (110, 111) mouillé avec le liquide durcissable, dans lequel la forme de l'élément de blindage électrique (110, 111) durci et des conducteurs électriques (102) entourés par celui-ci correspond à la forme d'un site d'installation de l'écheveau de câbles (100) ou est adaptée à celui-ci.
